# EUROPÄISCHE PATENTSCHRIFT

(11) **EP 2 178 364 B1**
(45) Veröffentlichungstag und Bekanntmachung des Hinweises auf die Patenterteilung: **27.04.2011**
(21) Anmeldenummer: 08784340.5
(22) Anmeldetag: 18.07.2008
(51) Int. Cl.: A01N 1/02

(54) **VORRICHTUNG UND PERFUSIONSBEUTEL ZUR LAGERUNG VON DRUCKEMPFINDLICHEN ORGANEN UND ORGANTEILEN**
DEVICE AND PERFUSION BAG FOR STORAGE OF PRESSURE-SENSITIVE ORGANS AND ORGAN PARTS
SYSTÈME ET POCHE DE PERFUSION POUR LA CONSERVATION D'ORGANES ET DE FRAGMENTS D'ORGANES SENSIBLES À LA PRESSION

(30) Priorität: 21.07.2007 DE 102007034130; 21.07.2007 DE 102007034132
(43) Veröffentlichungstag der Anmeldung: 28.04.2010
(73) Patentinhaber: Technische Universität Dresden, 01062 Dresden (DE)
(72) Erfinder: THIELE, Christine, 01129 Dresden (DE); SLIWINSKI, Grzegorz, 01127 Dresden (DE); FRANZ, Felix, 37520 Osterode (DE)
(74) Vertreter: Kaufmann, Sigfrid
(86) Internationale Anmeldenummer: PCT/DE2008/001157
(87) Internationale Veröffentlichungsnummer: WO 2009/012751

(56) Entgegenhaltungen:
- WO-A-2005/022994
- DE-C1- 19 928 485

## Beschreibung

Die Erfindung betrifft eine Vorrichtung zur Lagerung von druckempfindlichen Organen und Organteilen, die sich durch eine schwebende Lagerung der Organe bzw. Organteile auszeichnet, sodass diese nur einem sehr geringen, aus jeder Richtung vergleichbar hohen Druck ausgesetzt sind. Die Vorrichtung kann überdies auch zur Lagerung von anderen druckempfindlichen Gegenständen, beispielsweise Scaffolds (Bereich Tissue Engineering) oder Früchte (Bereich Botanik), verwendet werden. Hierbei wird ein Perfusionsbeutel für explantierte Organe und Organteile verwendet, mit welchem eine Perfusion unter sterilen, physiologischen Bedingungen bei sehr geringen Druckbelastungen möglich ist.

Im Bereich der Organtransplantation ist es oft notwendig, Spenderorgane über einen längeren Zeitraum zu konservieren, wobei die volle Funktionsfähigkeit des Organs erhalten werden muss. Üblicherweise liegt zwischen der Entnahme eines Organs aus dem Körper des Organspenders und dem Einsetzen in den Körper des Organempfängers ein Zeitraum von bis zu mehreren Stunden.

Üblicherweise werden explantierte Organe statisch kalt konserviert oder seltener in verschiedenen Temperaturbereichen perfundiert. Dabei werden die Organe nicht schwebend, im Extremfall sogar auf einer starren Unterlage, gelagert. Für parenchymatöse Organe mit geringem Bindegewebsanteil, die dadurch druckempfindlich sind, bedeutet eine derartige mehrstündige Lagerung eine Schädigung/Zerstörung der unteren Organabschnitte.

Solche Verfahren und Vorrichtungen zur Konservierung von Spenderorganen werden u.a. in DE 43 42 728 A1 und DE 44 07 863 C2 beschrieben. Gemäß beider Schriften werden die Organe auf den Boden von Lagergefäßen gelegt. Aufgrund ihrer Eigenmasse werden die unteren Organpartien schlecht durchblutet und großen Druckbelastungen ausgesetzt, wodurch die Organe irreversible Schäden erleiden.

Eine Alternative hierzu besteht darin, die Organe hängend zu lagern. Das Organ wird üblicherweise mittels der stärksten Gefäße des Organs aufgehängt. Dadurch werden zwar die Druckbelastungen vermieden, die Organe sind jedoch Zugkräften ausgesetzt. Hinzukommt, dass für eine solche Lagerung nur Organe geeignet sind, deren Gefäße stark genug für die damit verbundenen mechanischen Belastungen sind.

Aus dem Stand der Technik sind zahlreiche Lösungsvorschläge bekannt, die das Ziel haben, die Druckbelastungen bei der Lagerung von Organen, die perfundiert werden und steril gelagert sind, zu verringern.

So wird in WO 02/089571 A1 ein System zur Lagerung und zum Transport von Organen beschrieben, das über ein System zur Versorgung des Organs mit Blut und einer weiteren Flüssigkeit verfügt. Zur Lagerung wird das Organ in ein anatomisch geformtes, wannenartiges Gefäß gelegt.

Durch die Verwendung eines solchen anatomisch geformten Gefäßes wird die verstärkte Druckbelastung der unteren Organpartien zwar verringert, jedoch nicht vollständig vermieden.

In DE 199 28 485 C1 wird ein Perfusionssystem für menschliche oder tierische Organe oder Körperteile, insbesondere für eine Leber mit Einrichtungen zur Blutversorgung offenbart, das aus einem inneren Beutel zur Aufnahme des Organs besteht, der sich in einem mit Flüssigkeit befüllten äußerem Beutel befindet. Die beiden Beutel sind an einem tischartigen Trägergestell befestigt.

Durch die Lagerung des inneren Beutels in einem flüssigkeitsgefüllten äußeren Beutel wird die verstärkte Druckbelastung der unteren Organpartien zwar nachhaltig vermindert, da die Flüssigkeitsschicht zwischen den Beuteln jedoch sehr dünn und zudem der äußere Beutel flexibel ist, ist das Organ gegen Erschütterungen und Stöße, wie sie z.B. beim Transport auftreten, sehr schlecht geschützt. Hinzu kommt ein ungünstiges Handling, da beim Entnehmen des inneren Beutels die Lagerflüssigkeit zwangsläufig unkontrolliert ausläuft.

Des Weiteren wird in DE 103 40 488 B4 eine Anordnung zur extrakorporalen Organaufbewahrung mit mindestens einer temperaturgeregelten Organperfusionskammer vorgestellt, bei dem das Organ in einer impermeablen Schutzhülle eingelagert ist. Die Schutzhülle ist vollständig von einer gleichzeitig als Perfusat genutzten Lagerflüssigkeit umgeben, die sich in einem kastenartigen Behälter befindet.

Durch die schwebende Lagerung, den starren Kasten und die vergleichsweise große Dicke der Flüssigkeitsschicht um die Schutzhülle ist das Organ zwar vor punktuellen Druckbelastungen und vor Stößen während eines Transports geschützt, das Ein- und Ausbringen der Organe ist jedoch kompliziert. Das Entnehmen des Organs aus der Schutzhülle führt dazu, dass das Organ anschließend nicht mehr steril ist. Soll das Organ steril gelagert bleiben, muss die komplette Schutzhülle entnommen werden. Hierzu ist es jedoch notwendig, entweder die Lagerflüssigkeit abzulassen; anderenfalls muss das unkontrollierte Austreten der Lagerflüssigkeit aus dem Behälter in Kauf genommen werden.

Aufgabe der Erfindung ist es, die Nachteile des Standes der Technik zu beseitigen. Insbesondere soll eine Vorrichtung geschaffen werden, die mittels einer schwebenden Lagerung bewirkt, dass die Organe bzw. Organteile nur einem sehr geringen, aus jeder Richtung praktisch gleich hohen Druck ausgesetzt sind. Das Ein- und Ausbringen der Organe soll unkompliziert und unter Beibehaltung der sterilen Lagerbedingungen möglich sein. Dabei soll ein Perfusionsbeutel zum Einsatz kommen, durch den die Organe und Organteile unter physiologischen Bedingungen gelagert werden.

Diese Aufgabe wird erfindungsgemäß durch die kennzeichnenden Merkmale des Anspruchs 1 gelöst; vorteilhafte Ausgestaltungen der Erfindung ergeben sich aus den Ansprüchen 2 bis 14.

Die Vorrichtung zur Lagerung von druckempfindlichen Organen und Organteilen besteht aus einem Behälter, der mit einem flüssigen, gelartigen oder pulverförmigen Medium gefüllt ist, in dem sich ein der schwebenden Lagerung der Organe bzw. Organteile dienendes beutel- oder schlauchartiges Behältnis aus luft- und flüssigkeitsdichter Folie befindet. Nach Maßgabe der Erfindung ist mindestens eine Öffnung des Behältnisses durch eine Wand des Behälters geführt und der Rand des Behältnisses mit der Wand des Behälters luft- und flüssigkeitsdicht verbunden. Der als geschlossenes System ausgebildete Behälter ist partiell mit dem Lagermedium so gefüllt, dass das ungefüllte Restvolumen im Behälter größer ist, als das maximale Volumen der zu lagernden Organe/Organteile. Dabei entspricht die spezifische Dichte des Lagermediums etwa der Dichte der Organe.

Die Wahl eines Lagermediums mit ungefähr derselben Dichte, wie sie die Organe/Organteile haben, stellt sicher, dass die Organe schwebend, also völlig von dem Lagermedium umschlossen, gelagert werden. Es wird verhindert, dass die Organe/Organteile schwimmen, und folglich nicht vollständig von dem Lagermedium umschlossen sind, oder gar absinken, und möglicherweise auf dem Gefäßboden aufliegen.

Beim Einbringen der Organe/Organteile wird eine ihrem Volumen entsprechende Menge an Lagermedium verdrängt und infolgedessen das ungefüllte Restvolumen um dieses Volumen verringert. Da der Behälter bezüglich des Lagermediums ein geschlossenes System darstellt, wird das sich im Restvolumen befindende Gas komprimiert und infolgedessen der Gasdruck erhöht. Das ungefüllte Restvolumen muss deshalb einerseits um so viel größer als das maximale Volumen der Organe/Organteile eingestellt werden, dass der Gasdruck nach dem Einbringen der Objekte nicht zu groß wird. Andererseits darf das ungefüllte Restvolumen nicht zu groß gewählt werden, da sonst die Menge des Lagermediums nicht mehr für die schwebende Lagerung der Organe/Organteile ausreicht.

Das Behältnis zur Aufnahme der Organe/Organteile ist zunächst vollständig vom Lagermedium bedeckt. Um Organe/Organteile ohne schädliche Kraftaufwendungen in das Behältnis einbringen zu können, ist es notwendig, den Spiegel des Lagermediums im Bereich des Behältnisses auf eine unterhalb des Behältnisses liegende Höhe abzusenken. Dies kann entweder durch ein Kippen des die Lagerflüssigkeit enthaltenden Behälters oder mit Hilfe eines höhenverstellbaren Ausgleichsgefäßes, das jeweils mit einem luftführenden und einem die Lagerflüssigkeit führenden Schlauch mit dem Behälter verbunden ist, erfolgen

Vorteilhafterweise werden die Organe/Organteile zuerst steril in Beutel gepackt, die über entsprechende Zu- und Ableitungen für eine Perfusion des Organs mit Blut und/oder Perfusat verfügen. Die Beutel können bequem in das beutel- bzw. schlauchartige Behältnis der Lagervorrichtungen ein- oder aus diesen ausgebracht werden. Die Organe verbleiben hierbei immer in einer sterilen Umgebung.

In einer weiteren Ausgestaltung der Erfindung befindet sich im Behälter eine Heiz-/Kühlvorrichtung oder der Behälter ist in bekannter Weise mittels die Lagerflüssigkeit führenden Leitungen mit einer externen Heiz-/Kühlvorrichtung verbunden, wodurch wahlweise eine normotherme, eine subnormotherme oder eine hypotherme Konservierung ermöglicht wird.

Um eine Lagerung von Organen zur ermöglichen, die gezielten Druckschwankungen ausgesetzt werden müssen, wie zum z.B. für die Simulation von intrabdominalen Atemexkursionen, ist erfindungsgemäß vorgesehen, an den Behälter Vorrichtungen zur Erzeugung von Druckschwankungen, wie z.B. steuerbare Druckluftquellen oder Druckzylinder, anzuschließen.

Bevorzugt besteht der Behälter aus einem durchsichtigen Material, wie z.B. Glas oder Kunststoff, und das Behältnis aus einer Klarsichtfolie. Hierdurch wird eine visuelle Kontrolle ermöglicht, ohne dass die Organe/Organteile dazu aus dem Behältnis entnommen werden müssen.

Zur Lagerung der Organe/Organteile unter physiologischen Bedingungen befindet sich in dem Behältnis der Vorrichtung ein Perfusionsbeutel für explantierte Organe und Organteile. Auf der außen- und/oder innenseitigen Oberfläche des Beutels ist erfindungsgemäß mindestens eine Halterung mit mindestens zwei daran befestigten Kabelverschraubungen vorgesehen, die der Durchführung, Justage und gas- und flüssigkeitsdichten Fixierung von mindestens zwei Leitungen für den Anschluss der Gefäße der Organe/Organteile dienen.

Zum Verschließen der Öffnung des Perfusionsbeutels dienen entweder kraftschlüssige Verbindungen, beispielsweise Klemmleisten, flexible, ggf. mehrfach angeordnete Druckverschlüsse, oder formschlüssige Verbindung, beispielsweise ausgeführt als gas- und flüssigkeitsdichte Reißverschlüsse.

Durch die Verwendung der gas- und flüssigkeitsdichten Verschraubungen und Verschlüsse wird verhindert, dass Keime von außen in den Perfusionsbeutel eindringen. Die Sterilität im Innern des Beutels ist auch dann gewährleistet, wenn er sich in einer nicht sterilen Umgebung befindet.

Neben der Anwendung in der Transplantationsmedizin, kann der Perfusionsbeutel auch vorteilhaft in Verbindung mit anderen Vorrichtungen, z.B. zur wissenschaftlichen Untersuchung der Lagerungseinflüsse auf perfundierte Organe, verwendet werden.

Die erfindungsgemäße Vorrichtung wird nachfolgend anhand von drei Ausführungsbeispielen näher erläutert; hierzu zeigen in schematischer Darstellung
- Fig. 1:: Die Vorrichtung mit einem beutelartigen Behältnis,
- Fig. 2:: Die Vorrichtung mit einem schlauchartigen Behältnis und in
- Fig. 3:: Die Vorrichtung mit einem zusätzlichen Ausgleichsbehälter.

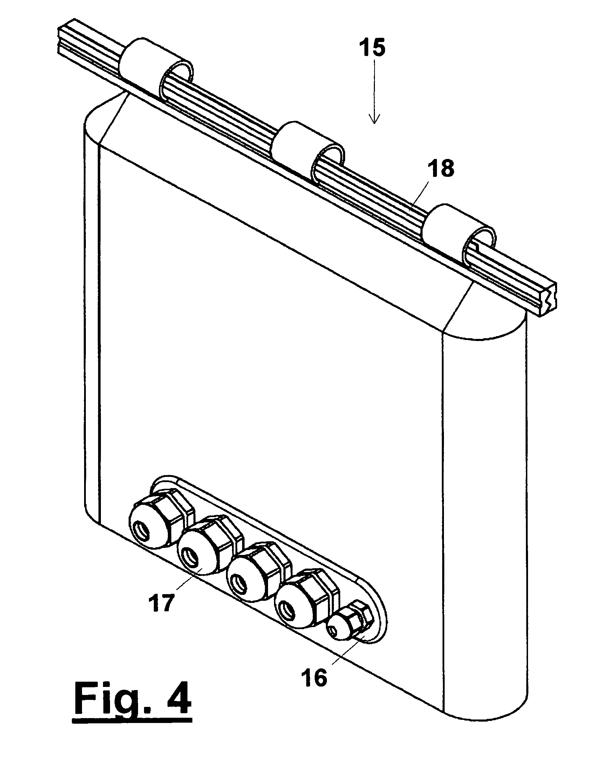

Zudem wird in Fig. 4 der Perfusionsbeutel näher dargestellt.

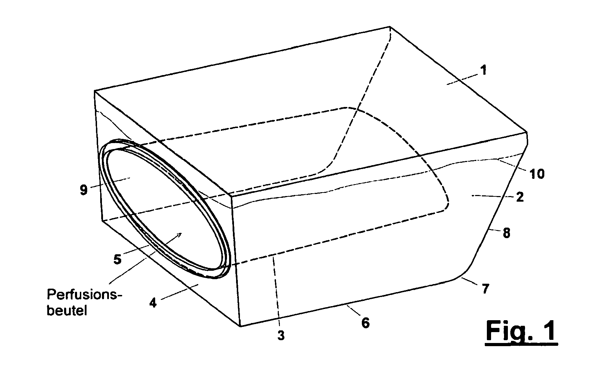

In Fig. 1 ist ein bis zum Füllstand 10 mit dem Lagermedium 2 befüllter kastenförmiger Behälter 1 aus durchsichtigem Kunststoff dargestellt. Durch die Behälterwand 4 ist ein beutelartiges Behältnis 3 aus Klarsichtfolie geführt, dessen Rand 5 luft- und flüssigkeitsdicht mit der Wand 4 des Behälters 1 verbunden ist. Die ursprüngliche Kante 7 zwischen dem Boden 6 und der Seitenwand 8, die der Behälterwand 4 gegenüberliegt, ist in eine Rundung überführt.

Um die Organe/Organteile, die sich üblicherweise unter sterilen Bedingungen in einem Beutel, der eine Perfusion mit Blut und/oder Perfusat ermöglicht, befinden, ohne schädliche Kraftanwendung in das Behältnis 3 einbringen zu können, wird zuerst der Füllstand 10 des Lagermediums 2 im Bereich des Behältnisses 3 auf eine unterhalb des Behältnisses 3 liegende Höhe abgesenkt. Dies wird dadurch erreicht, dass der Behälter 1 mittels einer Abrollbewegung über die Behälterrundung 7 derart gekippt wird, dass dieser am Ende der Bewegung auf der Seitenwand 8 steht und infolgedessen die Öffnung 9 des Behältnisses 3 nach oben weist.

Der Füllstand 10 des Lagermediums 2 befindet sich nun weit unterhalb der Öffnung 9 des Behältnisses 3, sodass die in einem Folienbeutel befindlichen Organe/Organteile bequem und ohne schädliche Krafteinwirkung in das Behältnis 3 eingebracht werden können.

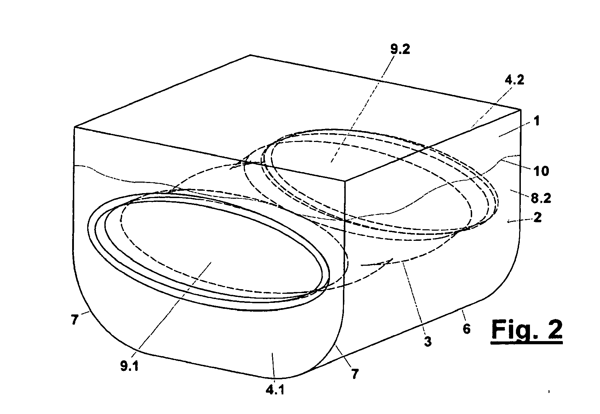

In Fig. 2 ist ein Behälter 1 dargestellt, bei welchem ein schlauchartiges Behältnis 3 mit seinen Öffnungen 9.1; 9.2 durch zwei gegenüberliegende Behälterwände 4.1; 4.2 geführt ist. Die Ränder des Schlauches 3 sind wiederum luft- und flüssigkeitsdicht mit den Behälterwänden 4.1; 4.2 verbunden. Die ursprünglichen Kanten 7 zwischen dem Boden 6 und den beiden Seitenwänden 8, durch die keine Öffnungen des Behältnisses 3 geführt sind, sind gleichfalls in Rundungen überführt. Die zum Einbringen der druckempfindlichen Objekte notwendige Absenkung des Füllstandes 10 des Lagermediums 2 wird ähnlich wie im Ausführungsbeispiel 1 durch ein Abrollen über die Rundungen bewerkstelligt.

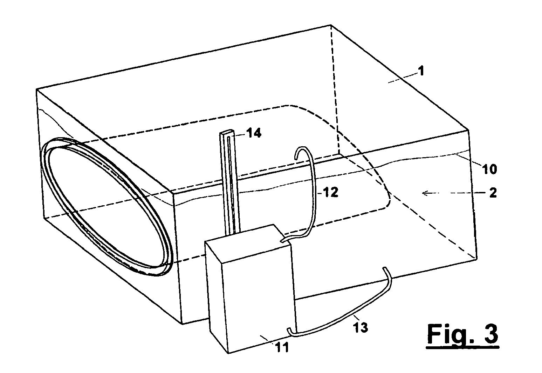

Fig. 3 zeigt einen Behälter 1, der mit einem höhenverstellbaren Ausgleichsbehälter 11 mittels eines luftführenden Schlauches 12 und eines das flüssige Lagermedium 2 führenden Schlauches 13 verbunden ist. Die Enden des Schlauches 12 sind in den oberen Teilen der Behälter 1, 11 angeschlossen, der Schlauch 13 analog in den unteren Teilen der Behälter 1, 11. Der Ausgleichsbehälter 11 ist mit einem Linearlager 14, das zu dessen Höhenverstellung dient, verbunden. Das Linearlager 14 ist vertikal am Behälter 1 befestigt.

Zum Einbringen der Organe/Organteile, wird der durch das Linearlager 14 geführte Ausgleichsbehälter 11 bis zum Endanschlag des Lagers 14 nach unten bewegt. Dadurch strömt Lagerflüssigkeit 2 über den Schlauch 12 in den Ausgleichsbehälter 10 und Luft strömt durch den Schlauch 12 aus diesem ab, wodurch der Flüssigkeitsspiegel 10 im Behälter 1 abgesenkt wird.

Nach erfolgtem Einbringen der Organe/Organteile wird der Ausgleichsbehälter 10 wieder nach oben geschoben, Lagerflüssigkeit 2 strömt zurück in den Behälter 1 und der Flüssigkeitsspiegel 10 wird angehoben, wodurch sichergestellt ist, dass sich wieder eine für die schwebende Lagerung ausreichende Flüssigkeitsmenge im Behälter 1 befindet.

Aus Fig. 4 ist zu entnehmen, dass der Perfusionsbeutel 15 aus durchsichtigem Kunststoff besteht und fünf Kabelverschraubungen 17 aufweist, die der gas- und flüssigkeitsdichten Durchführung von an vier Gefäßen des gelagerten Organs angeschlossenen Schlauchleitungen und einer Drainageleitung dienen. Der Perfusionsbeutel 15 ist beispielhaft für die Lagerung einer Leber vorgesehen, da diese zwei zuführende Blutgefäße, ein abführendes Blutgefäß sowie einen Gallengang besitzt und die sich im Perfusionsbeutel 15 sammelnden Sekrete drainiert werden müssen.

Die Verschraubungen 17 sind auf einer plattenförmigen Halterung 16 angebracht. Die Halterung 16 ist nach dem Spritzgießverfahren aus Kunststoff hergestellt und mit dem Beutel 15 verschweißt. Durch Verdrehen der Verschraubung 17 erfolgt die Fixierung der Schlauchleitungen. Durch die Fixierung der Schlauchleitungen wird eine Zugentlastung an den Gefäßen der Leber erreicht. Die fünfte Verschraubung ist aufgrund des deutlich geringeren Durchmessers des Gallenganges kleiner als die übrigen Verschraubungen 17 ausgeführt.

Der gas- und flüssigkeitsdichte Verschluss des Perfusionsbeutels 15 wird mit einer Klemmleiste 18, die aus zwei mittels Ringfedern zusammengepressten Leistenelementen besteht, erreicht.

Zur Einlagerung des Organs werden in steriler Umgebung die Schlauchleitungen an die Gefäße angeschlossen. Das Organ wird trocken, d.h. ohne Zugabe von Flüssigkeit, in den Perfusionsbeutel 15 gelegt. Anschließend werden die Schlauchleitungen durch die Verschraubungen 17 geführt und deren Überwurfmuttern soweit angezogen, dass die Schlauchleitungen fest gehalten werden und eine gas- und flüssigkeitsdichte Verbindung sichergestellt ist. Zuletzt wird die Öffnung des Perfusionsbeutels 15 mit Hilfe der Klemmleiste 18 verschlossen.

Da sowohl die Verschraubungen 17 als auch die Klemmleiste 18 wiederverschließbar sind, ist es möglich, Organe mehrfach zu positionieren oder Gewebeproben zu entnehmen.

Nach erfolgter Einlagerung kann der Perfusionsbeutel samt Organ auch in nicht sterile Bereiche gebracht werden. Im Innern des Perfusionsbeutels ist nach wie vor eine sterile Umgebung sichergestellt. Voraussetzung ist allerdings, dass auch die Enden der Schlauchleitungen gas- und flüssigkeitsdicht verschlossen oder an eine Perfusionsapperatur angeschlossen sind.

### Liste der verwendeten Bezugszeichen

- 1: Behälter
- 2: Lagermedium
- 3: Behältnis
- 4: Behälterwand
- 5: Rand
- 6: Behälterboden
- 7: Behälterkante/Behälterrundung
- 8: Seitenwand
- 9: Öffnung
- 10: Flüssigkeitsspiegel/Füllstand des Lagermediums
- 11: Ausgleichsbehälter
- 12: Luftführender Schlauch
- 13: Lagermedium führender Schlauch
- 14: Linearlager
- 15: Perfusionsbeutel
- 16: Halterung
- 17: Verschraubung
- 18: Verschlusselement, Klemmleiste

## Patentansprüche

1. Vorrichtung zur Lagerung von druckempfindlichen Organen und Organteilen einschließlich eines Behälters (1), der mit einem flüssigen, gelartigen oder pulverförmigen Medium (2) befüllt ist, in dem sich ein der schwebenden Lagerung der Organe bzw. Organteile dienendes beutel- oder schlauchartiges Behältnis (3) aus luft- und flüssigkeitsdichter Folie befindet, **dadurch gekennzeichnet, dass** mindestens die eine Öffnung (9) des Behältnisses durch eine Wand (4) des Behälters (1) geführt und der Rand (5) des Behältnisses (3) mit der Wand (4) des Behälters (1) luft- und flüssigkeitsdicht verbunden ist, wobei der als geschlossenes System ausgebildete Behälter (1) partiell mit dem Lagermedium (2) so befüllt ist, dass das ungefüllte Restvolumen im Behälter (1) größer ist, als das maximale Volumen der zu lagernden Organe/Organteile, wobei die spezifische Dichte des Lagermediums (2) etwa der Dichte der Organe/Organteile entspricht.

2. Vorrichtung nach Anspruch 1, **dadurch gekennzeichnet, dass** der Behälter (1) kastenförmig ausgeformt ist, wobei zumindest eine ursprüngliche Kante zwischen dem Boden (6) und einer Seitenwand (8) des Behälters (1) in eine Rundung oder Schräge (7) überführt ist, sodass der Behälter, ohne ihn vom Boden abzuheben, kippbar ist, wodurch eine Senkung des Flüssigkeitsspiegels (10) im Bereich des Behältnisses (3) erreichbar ist.

3. Vorrichtung nach Anspruch 2, **dadurch gekennzeichnet, dass** das Behältnis (3) beutelartig ausgeformt ist und die ursprüngliche Kante (7) zwischen dem Boden (6) und der Seitenwand (8), die der Behälterwand (4), durch welche die Öffnung (9) des Behältnisses (3) durchgeführt ist, gegenüberliegt, in eine Rundung oder Schräge überführt ist.

4. Vorrichtung nach Anspruch 2, **dadurch gekennzeichnet, dass** zum einen das Behältnis (3) schlauchartig ausgeformt ist, und seine Öffnungen (9.1; 9.2) jeweils durch zwei gegenüberliegende Behälterwände (4.1; 4.2) geführt sind und zum andern mindestens eine der ursprünglichen Kanten (7) zwischen dem Boden (6) und mindestens einer der Seitenwände (8), in denen sich keine Öffnung (9.1; 9.2) befindet, in eine Rundung oder Schräge überführt ist.

5. Vorrichtung nach Anspruch 1, **dadurch gekennzeichnet, dass** bei Verwendung eines flüssigen Lagermediums (2) zur Füllstandsregelung ein höhenverstellbarer, Ausgleichsbehälter (11) vorhanden ist und dieser mittels eines luftführenden Schlauches (12), der jeweils im oberen Teil der Behälter (1; 11) angeschlossen ist, und mittels eines das Lagermedium (2) führenden Schlauches (13), dessen Enden im unteren Bereich beider Behälter (1; 11) angeschlossen sind, mit dem Behälter (1) verbunden ist.

6. Vorrichtung nach Anspruch 5, **dadurch gekennzeichnet, dass** der Ausgleichsbehälter (11) mit einem vertikal am Behälter (1) angebrachten Linearlager (14), das der Höhenverstellung des Ausgleichsbehälters (11) dient, verbunden ist.

7. Vorrichtung nach Anspruch 1 bis 6, **dadurch gekennzeichnet, dass** sich im Behälter (1) eine Heiz-/Kühlvorrichtung befindet.

8. Vorrichtung nach Anspruch 1 bis 7, **dadurch gekennzeichnet, dass** die Behälter (1; 11) durchsichtig sind und das Behältnis (3) aus Klarsichtfolie besteht.

9. Vorrichtung nach Anspruch 1 bis 8, **dadurch gekennzeichnet, dass** der Behälter (1) zusammen mit einem Gerät zur Einstellung von Über- und Unterdruck verwendet wird.

10. Vorrichtung nach Anspruch 1 bis 9, **dadurch gekennzeichnet, dass** das Behältnis (3) druckdicht verschließbar ist.

11. Vorrichtung nach Anspruch 1 bis 10, **dadurch gekennzeichnet, dass** in dem Behältnis (3) ein Perfusionsbeutel mit einer Öffnung zur Einbringung von Organen/Organteilen, die durch mindestens ein kraft- oder formschlüssiges Element (18) verschließbar ist, eingebracht ist, wobei sich auf der außen- und/oder innenseitigen Oberfläche des Perfusionsbeutels (15) mindestens eine Halterung (16) mit mindestens zwei daran befestigten Kabelverschraubungen (17) befindet, die der Durchführung, Justage und gas- und flüssigkeitsdichten Fixierung von mindestens zwei Leitungen für den Anschluss der Gefäße der Organe/Organteile dienen.

12. Vorrichtung nach Anspruch 11, **dadurch gekennzeichnet, dass** das kraftschlüssige Element (18) eine Klemmleiste ist.

13. Vorrichtung nach Anspruch 11, **dadurch gekennzeichnet, dass** das formschlüssige Element (18) ein flüssigkeitsdichter Reißverschluss ist.

14. Vorrichtung nach Anspruch 11, **dadurch gekennzeichnet, dass** das kraftschlüssige Element (18) ein flexibler Druckverschluss ist.

## Claims

1. A device for the storage of pressure-sensitive organs and organ parts including a container (1) which is filled with a liquid, gel-like or powdered medium (2) and in which there is a receptacle (3) in the form of a bag or tube made of a film impervious to air and liquids and serving to hold the organ or organ parts in a floating manner, **characterised in that** at least one opening (9) of the receptacle (3) is passed through a wall (4) of the container (1) and the edge (5) of the receptacle (3) is connected to said wall (4) of the container (1) in an air- and liquid-tight manner, wherein the container (1) thus formed as a closed system is partially filled with the storage medium (2), such that the remaining unfilled volume in the container (1) is greater than the maximum volume of the organs/organ parts to be stored, and wherein the specific density of the storage medium (2) corresponds approximately to the density of the organs/organ parts.

2. A device according to Claim 1, **characterised in that** the container (1) is formed in the manner of a box, wherein at least one original edge between the base (6) and a side wall (8) of the container (1) is formed as a rounding or bevel (7), such that the container can be tilted without lifting from the base, thereby achieving a lowering of the level of the liquid (10) in the area of the receptacle (3).

3. A device according to Claim 2, **characterised in that** the receptacle (3) is formed in the manner of a bag and the original edge (7) between the base (6) and the side wall (8) which lies opposite the container wall (4) through which the opening (9) of the receptacle (3) is passed is formed as a rounding or bevel.

4. A device according to Claim 2, **characterised in that** firstly the receptacle (3) is formed in the manner of a tube and its two openings (9.1; 9.2) are passed through two opposite container walls (4.1; 4.2) and secondly at least one of the original edges (7) between the base (6) and at least one of the side walls (8) in which there is no opening (9.1; 9.2) is formed as a rounding or bevel.

5. A device according to Claim 1, **characterised in that** in connection with the use of a liquid storage medium (2) a height-adjustable equalising container (11) is provided for the purpose of filling level control and this equalising container is connected with the container (1) by way of a hose (12) bearing air, which is connected in the area of the top of each of the containers (1; 11) and by way of a hose (13) bearing the storage medium (2), whose ends are connected in the lower area of each of the two containers (1; 11).

6. A device according to Claim 5, **characterised in that** the equalising container (11) is connected with a linear bearing (14) mounted vertically on the container (1) and serving for height adjustment of the equalising container (11).

7. A device according to Claims 1 to 6, **characterised in that** a heating/cooling device is provided in the container (1).

8. A device according to Claims 1 to 7, **characterised in that** the containers (1; 11) are transparent and the receptacle (3) is made of a transparent film.

9. A device according to Claims 1 to 8, **characterised in that** the container (1) is used together with a device to set over- and underpressure.

10. A device according to Claims 1 to 9, **characterised in that** the receptacle (3) can be sealed in a pressure-tight manner.

11. A device according to Claims 1 to 10, **characterised in that** a perfusion bag with a opening for the introduction of organs/organ parts which can be closed by way of at least one non-positive or positive closure element (18) is introduced into the receptacle (3), wherein at least one mounting (16) onto which at least two cable glands (17) are mounted is provided on the outer and/or inner surface of the perfusion bag (15), serving for the passage, adjustment and gas- and liquid-tight fixing of at least two lines for connection of the vessels of the organs/organ parts.

12. A device according to Claim 11, **characterised in that** the non-positive closure element (18) is a clamping strip.

13. A device according to Claim 11, **characterised in that** the positive closure element (18) is a liquid-tight zip fastener.

14. A device according to Claim 11, **characterised in that** the non-positive closure element (18) is a flexible pressure seal.

## Revendications

1. Dispositif de stockage d'organes et de parties d'organes sensibles à la pression, comprenant un récipient (1) rempli d'un produit (2) de type liquide, gel ou poudre, dans lequel une poche (3) réalisée en forme de sachet ou de boyau en film étanche à l'air et aux liquides, convenant pour le stockage d'organes ou de parties d'organe en suspension, **caractérisé en ce qu'**au moins l'ouverture (9) de la poche traverse une paroi (4) du récipient (1) et que le bord (5) de la poche (3) est relié à la paroi (4) du récipient (1) de manière étanche à l'air et aux liquides, le récipient (1) réalisé comme système fermé étant partiellement rempli de produit de stockage (2) de sorte que le volume résiduel non rempli du récipient (1) soit supérieur au volume maximal des organes ou parties d'organe stockés, la densité spécifique du produit de stockage (2) étant approximativement égale à la densité des organes ou des parties d'organe.

2. Dispositif selon la revendication 1, **caractérisé en ce que** le récipient (1) est en forme de caisse, au moins une arête initiale située entre le fond (6) et une paroi latérale (8) du récipient (1) présentant une transition arrondie ou oblique (7) permettant d'incliner le récipient sans le soulever du sol et d'abaisser le niveau du liquide (10) autour de la poche (3).

3. Dispositif selon la revendication 2, **caractérisé en ce que** la poche (3) est réalisée en forme de sachet et que l'arête initiale (7) située entre le fond (6) et la paroi latérale (8) à l'opposé de la paroi (4) du réservoir, à travers laquelle passe l'ouverture (9) de la poche (3), présente une transition arrondie ou oblique.

4. Dispositif selon la revendication 2, **caractérisé en ce que**, d'une part, la poche (3) est réalisée en forme de boyau et que ses ouvertures (9.1 ; 9.2) traversent deux parois opposées (4.1 ; 4.2) du récipient et que, d'autre part, au moins une des arêtes initiales (7) situées entre le fond (6) et au moins une des parois latérales (8) dépourvues d'ouverture (9.1 ; 9.2) présente une transition arrondie ou oblique.

5. Dispositif selon la revendication 1, **caractérisé en ce que**, en cas d'utilisation d'un produit de stockage (2) liquide, le dispositif comporte un récipient compensateur (11) réglable en hauteur pour régler le niveau de remplissage, et que celui-ci est relié au récipient (1) par un tuyau (12) servant de conduite d'air et dont les extrémités sont raccordées sur le haut des récipients (1 ; 11), et par un tuyau (13) traversé par le produit de stockage (2) et dont les extrémités sont raccordées sur le bas des deux récipients (1 ; 11).

6. Dispositif selon la revendication 5, **caractérisé en ce que** le récipient compensateur (11) est relié à une glissière (14) fixée verticalement au récipient (1) pour régler la hauteur du récipient compensateur (11).

7. Dispositif selon les revendications 1 à 6, **caractérisé en ce que** le récipient (1) intègre un dispositif de chauffage/réfrigération.

8. Dispositif selon les revendications 1 à 7, **caractérisé en ce que** les récipients (1 ; 11) sont transparents et que la poche (3) est en film transparent.

9. Dispositif selon les revendications 1 à 8, **caractérisé en ce que** le récipient (1) est utilisé avec un appareil permettant de créer une surpression ou une dépression par rapport à la pression atmosphérique.

10. Dispositif selon les revendications 1 à 9, **caractérisé en ce que** la poche (3) peut être fermée de manière étanche à la pression.

11. Dispositif selon les revendications 1 à 10, **caractérisé en ce qu'**une poche de perfusion comportant une ouverture qui permet d'introduire des organes ou des parties d'organe et qui est munie d'au moins un élément (18) permettant de la fermer par prise de force ou par prise géométrique, est placée dans la poche (3), la surface intérieure et/ou extérieure de la poche de perfusion (15) étant munie d'au moins un support (16) auquel sont fixés au moins deux presse-étoupes (17) servant à faire passer, à ajuster et à fixer au moins deux conduites de manière étanche aux gaz et aux liquides pour le raccordement des vaisseaux des organes ou des parties d'organe.

12. Dispositif selon la revendication 11, **caractérisé en ce que** l'élément (18) de fermeture par prise de force est une réglette à pince.

13. Dispositif selon la revendication 11, **caractérisé en ce que** l'élément (18) de fermeture par prise géométrique est une fermeture à glissière étanche aux liquides.

14. Dispositif selon la revendication 11, **caractérisé en ce que** l'élément (18) de fermeture par prise de force est une fermeture à pression flexible.
